# EUROPEAN PATENT APPLICATION

(11) **EP 0 549 169 A1**
(43) Date of publication of application: **30.06.1993**
(21) Application number: 92311103.3
(22) Date of filing: 04.12.1992
(51) Int. Cl.: H04N 7/167

(54) **Method and apparatus for tagging video frames**

(30) Priority: 06.12.1991 US 802923; 06.12.1991 US 805720
(71) Applicant: GTE LABORATORIES INCORPORATED, Wilmington Delaware 01901 (US)
(72) Inventor: Walker, Stephen S., Marlborough, MA 01752 (US); Lenart, Joseph, Arlington, MA 02174 (US)
(74) Representative: Bubb, Antony John Allen

(57) **Abstract**

Method and apparatus for tagging fields in television format having active portions. A video encoder at the source of the fields embeds at least one repetitive series of pseudo-random characters with marks in the active portions of fields. The position of each of the marks corresponding to one or more of the characters. The marks pseudo-randomly change position with subsequent fields.

## Description

This invention pertains to marking video signals with identifying data, and more particularly, to marking video signals with identifying data which is difficult to remove.

Video trace systems are known which insert identifying data into the non-displayed segments of video signals, for examples, in the vertical blanking interval or the synchronization portion. It is relatively simple to remove such data from the non-displayed area of the video signal. The non-picture segments can be identified and replaced with a standard signal source, leaving the active video image which is the valuable proprietary part of the video waveform. It is desirable to provide an apparatus and a method for inserting tagging data into the display area of a video signal.

In accordance with one aspect of the invention, there is provided an apparatus for tagging fields in television format having active portions, comprising: a source for transmitting or recording fields in television format having active portions; means at said source for providing at least one repetitive series of pseudo-random characters; and means at said source for inserting marks in the active portions of fields with the position of each of said marks corresponding to one or more of said characters, said marks pseudo-randomly changing position with sequential fields.

In accordance with another aspect of the invention, there is provided a method of tagging fields in television format having active portions, comprising the steps of: transmitting or recording, at a source, fields in television format having active portions; providing at said source at least one repetitive series of pseudo-random characters; and embedding at said source marks in the active portions of fields with the position of each of said marks corresponding to one or more of said characters, said marks pseudo-randomly changing position with sequential fields.

In the drawings:
Figure 1 is a representative video field illustrating its segments;
Figures 2 to 5 illustrate a first apparatus for inserting tagging data into the active portion of the field;
Figures 6 to 10 illustrate a second apparatus for inserting tagging data into the active portion of the field; and
Figure 11 illustrates apparatus for recovering the tagging data.

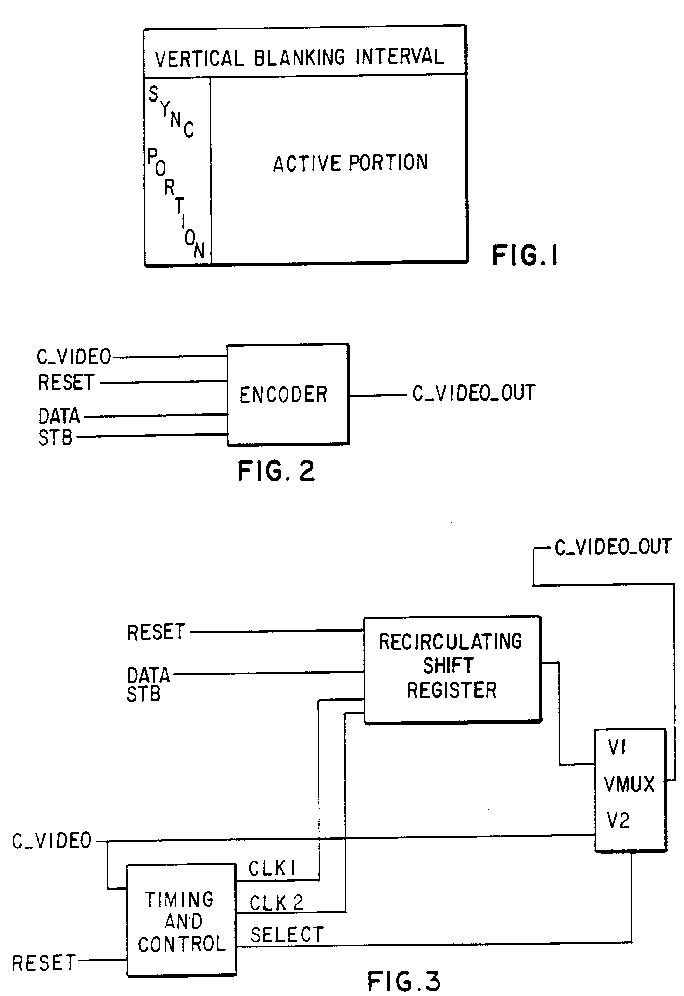

As a feature of the invention, identifying information is embedded into the active video portion of a video field, such as seen in Figure 1, with little if any degradation to the video quality. The information is placed at pseudo-random positions in pseudo-random lines. The placement of the information is dispersed and enough redundancy is provided to recover the embedded information at a later time, providing means to determining the source of the program.

The tagging information may be inserted in recorded program format, or in transmitted programs including switched or broadcast programs.

In a switched service environment, when a user requests a particular program, a central facility encodes the requested video on the fly. Identification may be a copyright notice and the caller's particulars such as equipment's serial number and the date and time of the program non-obstructively inserted in the visible portion of full motion video. Also the information may be pseudo-random marks inserted in the active portion.

The central facility computer preloads the encoder with the relevant information and starts the service for the subscriber. The video that arrives at the subscriber location contains the information dispersed throughout the entire session duration. Thus if the caller decides to make an unauthorized recording of the incoming video all of the information and the identifying data will also be recorded.

In broadcast environment, a descrambling unit may be used. An identification code unique to the descrambler can be embedded in the video. An encoder device can be incorporated into the descrambler itself.

Figures 2 to 6 illustrate a first apparatus for inserting tagging data into the active portion of the field. Figure 2 shows an overview in which a video encoder inserts data in the active image portion of a video signal. It is difficult to detect and remove this data without altering the original source material. The encoder is shown with an interface to a computer. All of the relevant data and the identifying information, including DATA, the STB and the RESET signals are loaded into the encoder via this interface, which is represented as serial but may be parallel.

The C_VIDEO and the C_VIDEO_OUT labels identify the composite video to be encoded and the encoded video respectively. The incoming and encoded video signals are in baseband format. When the computer requires the attention of the encoder, it activates the RESET signal, which in turn resets the encoder and places it in a mode in which data can be loaded. The reset signal also initializes other circuits in the encoder to known states After the required data has been entered, the encoder begins its normal operation by multiplexing the identifying information to the decoded incoming video at pseudo-random locations.

In Figure 3 the encoder is depicted in more detail. The major blocks are recirculating shift register block (RSRB), timing and control block (TCB), and video multiplexer block (VMUX). Recirculating shift register block holds the identifying data to be embedded into the video. Timing and control block generates composite sync, pixel clock and select signal for the VMUX. Video multiplexer routes either the shift register block output or the incoming composite video to its output as determined by the polarity of the select signal.

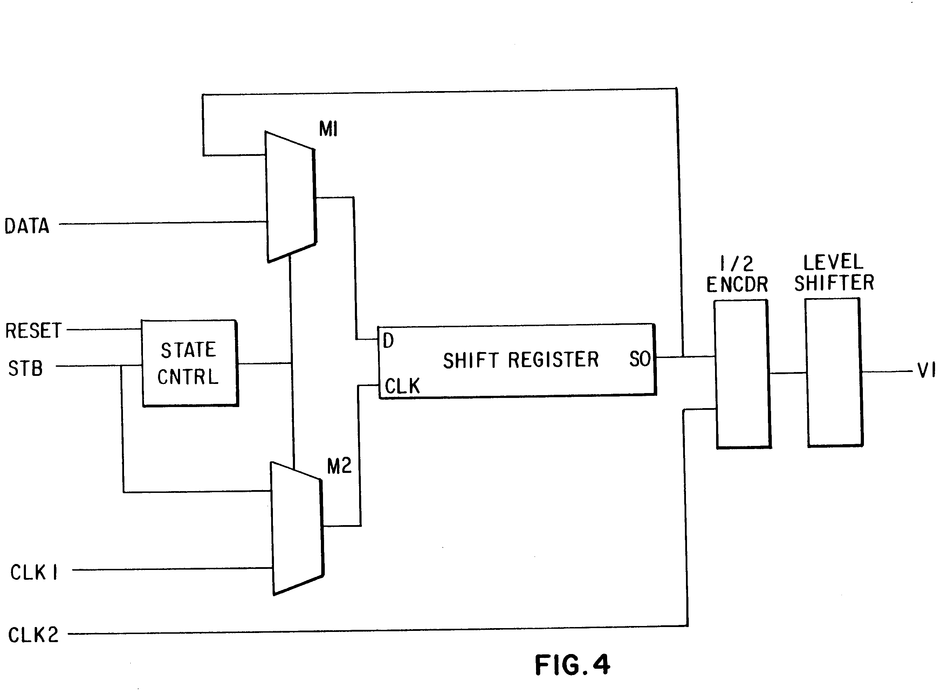

Figure 4 shows the recirculating shift register structure, manchester encoder, and level shifter. Level shifter assures that the voltage levels corresponding to binary digits 0 and 1 are at the proper levels so that multiplexing them with the video would not disturb the latter. manchester encoder maps a single binary digit 0 and 1 into two binary digits 01 and 10 respectively. This encoding provides redundancy and also helps hide the bit by providing an average grey level where the data insertion is made. Recirculating shift register is loaded by the computer via the DATA and STB signals. When the RESET signal is issued by the controlling computer, the state control block assumes the state in which both of the 2-to-1 multiplexers M1 and M2 pass the DATA input to the shift register serial input and the STB signals to the shift register clock input. Thus every bit that is STROBED results in shifting into the SHIFT register. When sufficient bits are entered into the shift register, the state control block changes its state to permit recirculating at the CLK1 rate. The bits are clocked out on the right hand side of the shift register while simultaneously shifted in on the left hand side. When a bit appears at the output of the shift register SR, it is converted into the 01 or 10 patterns and clocked out of the manchester encoder at the CLK2 rate. CLK2 is a gated clock signal of only two pulses. The level shifter then shapes and shifts these two bits into acceptable baseband video levels. The gate signal used to derive the gated clock CLK2 is also routed to the VMUX block which enables the two bits representing the DATA to be embedded in its output.

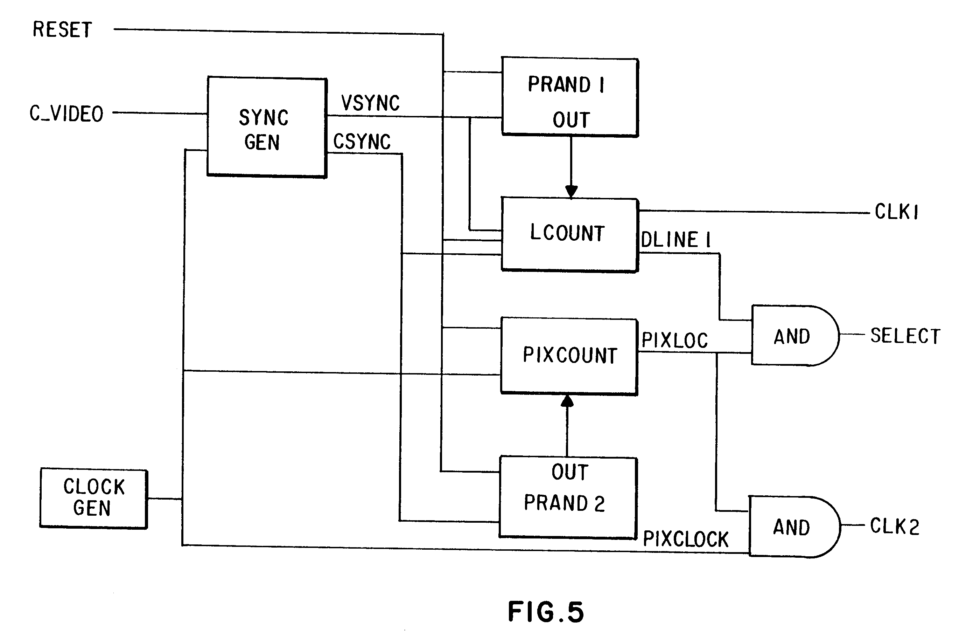

In Figure 5 the timing and control block is illustrated. This block is made up of a sync generator, two pseudo random number generators PRAND1 and PRAND2 and two counters LCOUNT and PIXCOUNT. The sync generator is a genlockable circuit that takes the incoming composite video and a high speed clock and generates the composite and the vertical synchronization signals. The pseudo-random number generator PRAND1 and the LCOUNT blocks select a pseudo-random line number between 21 and 252. LCOUNT is a line counter which increments with every pulse of the composite sync signals. When the output of the PRAND 1 and the LCOUNT match, the DLINE1 signal is activated which enables the AND gate. The PRAND2 pseudo-random number generator is clocked by the composite sync signal. The PIXCOUNT clears with the composite sync signal and increments with every PIXCLK pulse. The output of the pixel location on the raster line selected by the PRAND1 and the LCOUNT. The PIXLOC signal is two clock pulses wide and forms the select signal for the V2 input and selects the V1 input from the shift register block. During the asserted select signal and the output C_VIDEO_OUT contains the two bits from the shift register. As soon as the select signal is deasserted, the C_VIDEO_OUT becomes the V2 input which is the incoming composite video signal.

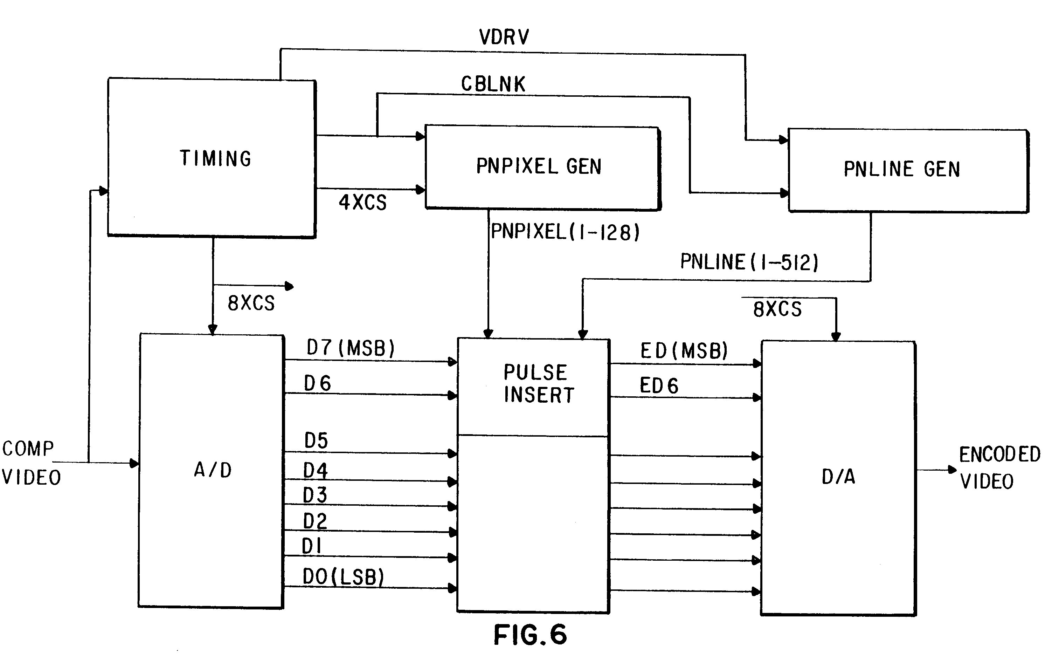

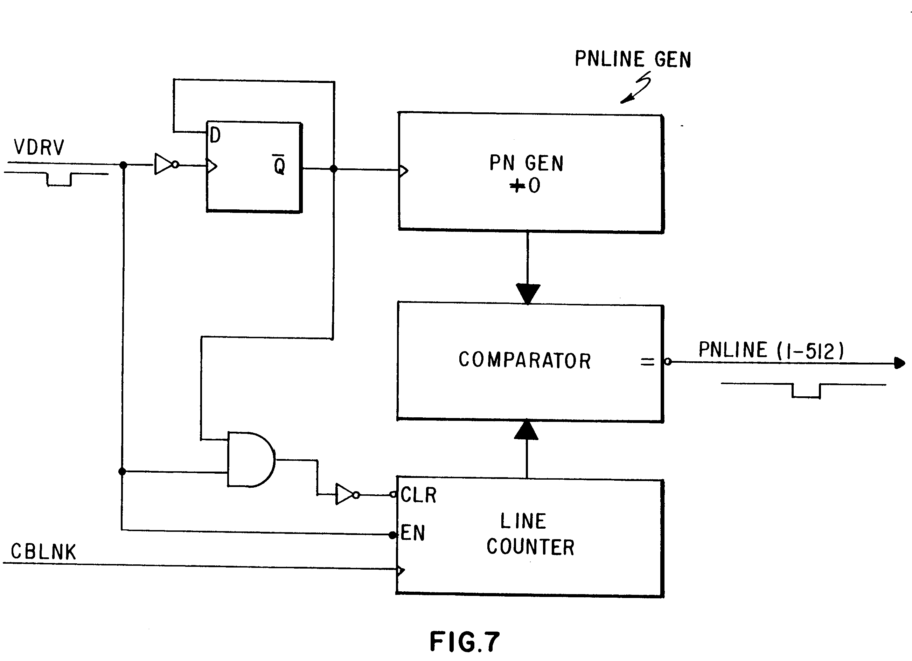

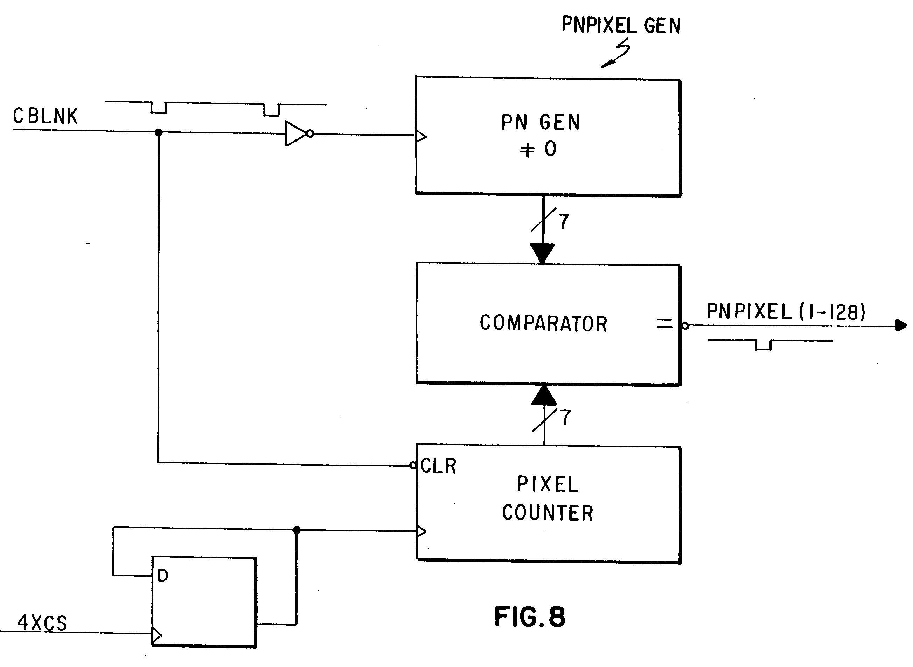

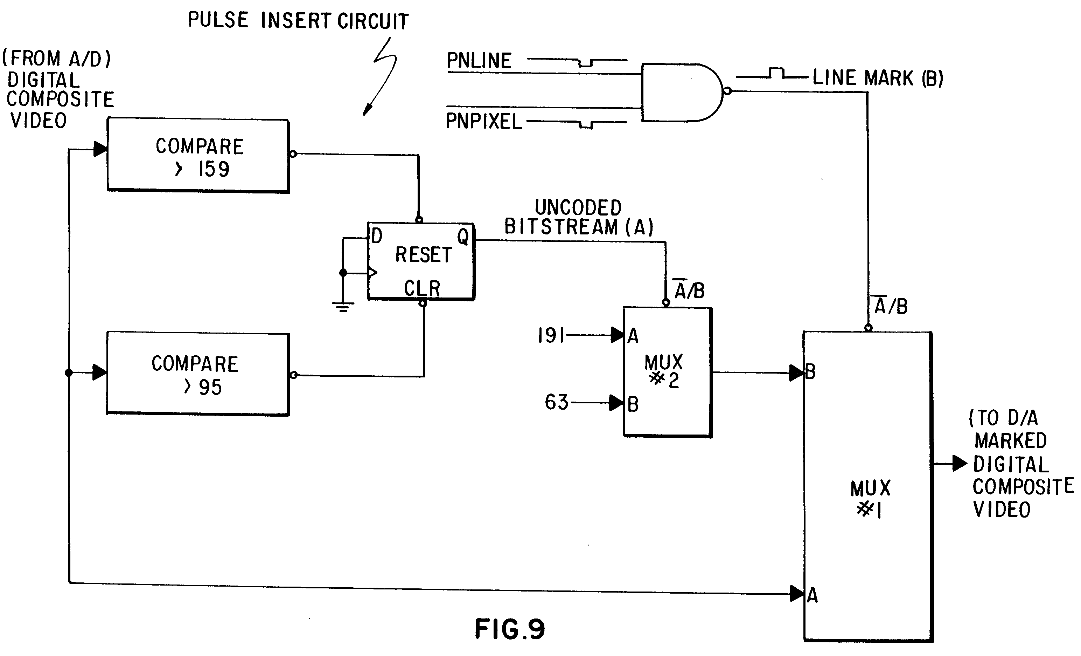

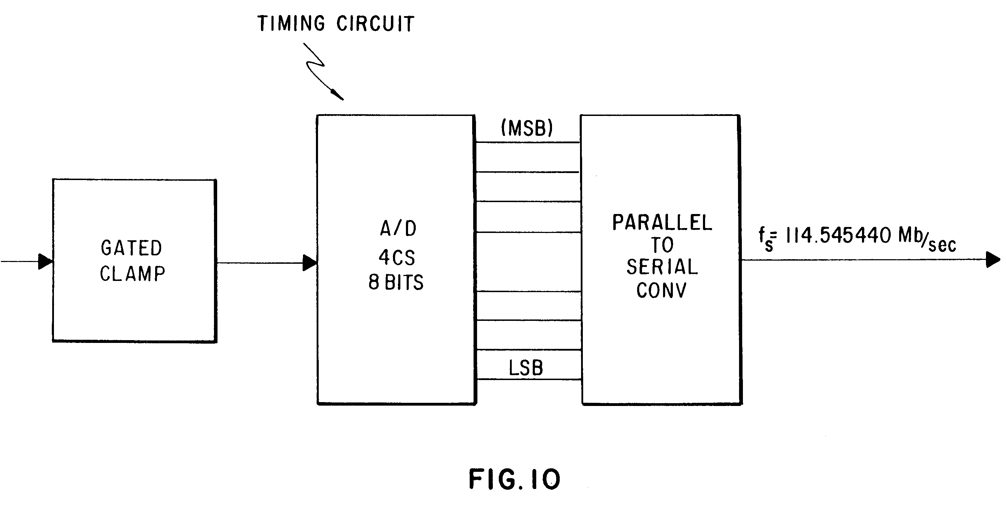

Figures 6 to 10 illustrate a second apparatus for inserting tagging data into the active portion of the field. Referring to Figure 6, samples of analog video are converted to 8 bit digital bytes by an A/D converter. The analog video may be a NTSC video waveform and the associated conversion may conform to the 160 IRE binary code. The digitized signal is supplied to video encoder. The encoder inserts pulses into the image portion of the incoming video signal and creates the marked video signal. The marked video waveform is generated by monitoring the level of selected samples at encoder and adding pulses to the waveform to cause the waveform to cross a predetermined threshold. A pseudo-random sequence of pixels and lines is used at the encoder to select the samples to place the pulses and can be keyed to the video transmission. The encoded digital signal is converted to analog by D/A converter.

All or some of a series of fields may have a mark pseudo-randomly located at a pixel on a line. Each field is preceded by a vertical drive pulse (VDRV). Each line and field is preceded by a composite blanking pulse (CBLNK).

VDRV is used to clock a new pseudo-random value at the start of every video field. VDRV is also used to clear the line counter at the beginning of a video field and disable the counter during non active video lines. When the value of the pseudo-random number generator equals the line counter, a low pulse PN LINE is generated via a comparator. This happens at pseudo-random lines in the active video part of a video field.

CBLNK is used to clock a new pseudo-random value at the start of each new video line. CBLN also clears the pixel counter during the non-active part of the video signal. Once the counter is enabled it is clocked by 4 times the color subcarrier divided by two. When the value of the pixel counter equals the value of the pseudo-random number generator, a low pulse (PN PIXEK) is generated via a comparator. This happens at pseudo-random locations in the active part of the video line.

PNLINE and PNPIXEL are NAND together to generate a select pulse of MUX #1. MUX#1 passes digital values unless a mark is to be inserted as determined by the line mark. The positive going select pulse provides input B to MUX#1 output. Input B is one of the two values that determine the value of the mark to be inserted into the video. The line mark may have one of two values, determined by the value of the video signal recorded at the time the line mark is inserted. If the video signal digital value was recorded as being greater than 159, a value of 63 is sent to the D/A converter. If a value of less than 95 was recorded, a 191 is sent to the D/A converter.

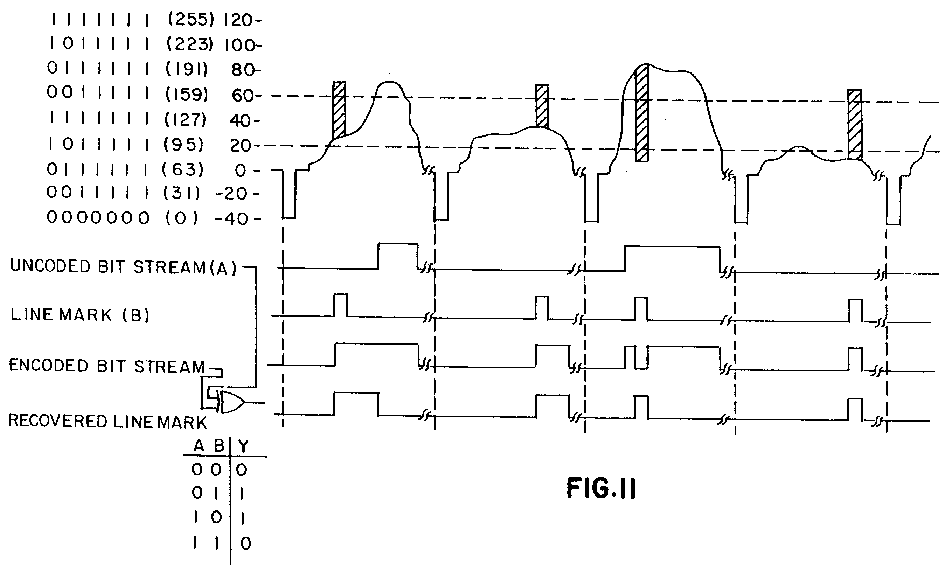

The pulses create transitions on the analog video image that can be located by using a decoder to monitor the marked video signal for the predetermined threshold crossings. In Figure 11 the decoder is an exclusive-or gate. The original and encoded waveforms are processed through a threshold detector and sent to the input of the exclusive-or gate. Positive transitions in the output signal of the exclusive-or gate indicate the location of pulses inserted from the pseudo-random code generated at the encoder. Comparing the transition locations to the placement of the pseudo-random pulses uniquely identifies a marked video signal. During operation, the decoder is set to a known state at the end of every line by the sync pulses that are part of the video format. To recover line mark data, the uncoded bit stream is exclusive OR'd with an encoded waveform processed in an identical manner. The recovered line mark is compared to the original line mark to find a match.

Any active portion of a video may be so marked, including prerecorded programs or transmitted programs.

The preferred embodiments and best mode of practicing the invention have been disclosed. In light of these teachings, variations of the specific examples will be obvious to those skilled in the art. Accordingly, the scope of the invention is to be determined be the following claims.

## Claims

1. Apparatus for tagging fields in television format having active portions, comprising:
a source for transmitting or recording fields in television format having active portions;
means at said source for providing at least one repetitive series of pseudo-random characters; and
means at said source for inserting marks in the active portions of fields with the position of each of said marks corresponding to one or more of said characters, said marks pseudo-randomly changing position with sequential fields.

2. Method of tagging fields in television format having active portions, comprising the steps of:
transmitting or recording, at a source, fields in television format having active portions;
providing at said source at least one repetitive series of pseudo-random characters;
and embedding at said source marks in the active portions of fields with the position of each of said marks corresponding to one or more of said characters, said marks pseudo-randomly changing position with sequential fields.
